# EUROPEAN PATENT SPECIFICATION

(11) **EP 1 564 656 B1**
(45) Date of publication and mention of the grant of the patent: **13.09.2006**
(21) Application number: 04250711.1
(22) Date of filing: 10.02.2004
(51) Int. Cl.: G06F 17/30, H04L 29/08

(54) **Apparatus and associated method for facilitating initiation of synchronization of database copies connected by way of a radio air interface**
Gerät und Methode zur Unterstützung der Initiierung der Synchronisierung von durch eine Funkschnittstelle verbundenen Datenbankenkopien.
Procédé et dispositif pour supporter la initiation de synchronisation des copies de base de données connecter par radio

(43) Date of publication of application: 17.08.2005
(73) Proprietor: Research In Motion Limited, Waterloo, Ontario N2L 3W8 (CA)
(72) Inventor: Yach, David Paul, Waterloo, Ontario, N2K 2N1 (CA); Linkert, Barry Warren, Petersbury, Ontario, N0B 2H0 (CA); Zhu, Jie, Kitchener, Onatrio, N2G 4Z7 (CA); Omar, Salim Hayder, Waterloo, Ontario, N2T 1Z1 (CA); Tysowski, Piotr K, Waterloo, Ontario, N2K 2R2 (CA); Hecht-Enns, Albert, Waterloo, Ontario, N2V 2S6 (CA); Phillips, Catherine, Waterloo, Ontario, N2T 2S5 (CA); Pereira, Kathy Ann, Waterloo, Ontario, N2V 2R7 (CA)
(74) Representative: Hibbert, Juliet Jane Grace

(56) References cited:
- EP-A- 0 917 077
- US-A- 5 974 238
- US-A- 6 052 735

## Description

The present invention relates generally to a manner by which to synchronize a database copy embodied at a mobile node with a corresponding database copy embodied at a network part of a communication network. More particularly, the present invention relates to apparatus, and an associated method, by which to facilitate initiation of a synchronization session by which to place, if necessary, the database contents of the respective databases in match with one another.

Session state information is generated at a device that initiates the synchronization session and communicates the session state information to a recipient device. The session state information identifies the synchronization state of the initiating device and identifies the synchronization session and the portions of the data that are to be synchronized during the synchronization session.

### BACKGROUND OF THE INVENTION

Many aspects of modem society rely upon the availability of communication systems through which to communicate data. Data is communicated pursuant to the effectuation of data communication services. Communication systems are generally constructed to attempt to communicate the data quickly and accurately. The data must be communicated, in some communication systems, over significant distances, and sometimes in spite of poor communication conditions.

A communication system includes, at a minimum, a set of communication stations, interconnected by way of a communication channel. A first of the communication stations forms a sending station, and another of the communication stations forms a receiving station. Communication services are effectuated by the communication of data from the sending station to the receiving station. Communication stations that include both a transmit portion and a receive portion are capable of two-way communications. That is, the communication station provides for the transmission of data therefrom and provides for the reception of data thereat. Communication services of many different types are effectuated in many different types of communication systems in which data is communicated pursuant to point-to-point or point-to-multipoint transmissions.

As advancements in technologies permit, improvements to existing communication systems are implemented and new types of communication systems are introduced. New types of communication services are permitted as a result of the use of such new, and improved, communication systems.

A radio communication system is an exemplary type of communication system, the use of which to communicate therethrough is popularly utilized. In a radio communication system, data that is communicated during its operation is communicated upon radio channels. Radio channels are defined upon a radio link that extends between the communication stations of the radio communication system. A wireline connection, conventionally required in a wireline communication system is obviated.

Advancements in technologies coincide with merging of technologies. That is to say, technology areas, previously disparate, are increasingly merging together. And, advancements in one technology area also benefit other technology areas. For instance, another endemic aspect of modem society is the need to perform data processing operations on many varied types of data. As technological advancements permit, increasingly-large amounts of data are able to be processed at increasingly-fast rates. Large amounts of data are able to be stored and processed pursuant to modem data processing techniques.

Communication systems, including radio communication systems, are regularly utilized by which to transport data that is subsequently processed by data processing techniques. And, technologies used for data processing are, increasingly, used during operation of communication systems. Technologies utilized by which to communicate data are, correspondingly, increasingly used in data processing systems by which to process data. Communication devices, and systems in which the devices are used, are available by which to perform various data processing operations and communication services. Additional applications and services, which implement new data processing and communication technologies, shall likely become available in the future.

Personal digital assistants (PDAs) are portable data storage and processing devices that are popularly utilized by many users. Personal digital assistants are typically of small dimensions, packaged in housings to permit their hand-carriage by a user. Portable digital assistants are exemplary of data processing devices. Databases are stored at the personal digital assistants, and the data stored thereat is selectably retrievable at the request of a user of the device. The data stored at the device is typically formatted into a series of data records in which each data record contains one or more data fields. Upon selection by the user, the data is retrieved and displayed or otherwise made available to the user. The user is also able to cause selected sorting, and other processing, operations to be performed upon the data that is contained at, or otherwise forms, the databases of the personal digital assistant. And, the user typically also is able to change, or add to, the data stored at the databases of the drive.

The ability to back-up the data stored at the data storage and processing device permits recovery of the data in the event of loss of the data at the device. Manners are provided by which to perform the back-up of the data. Conventional personal digital assistants, for instance, provide for back-up of the data upon a personal computer or other computing station, typically by way of a fixed cable, or other wireline, connection formed therebetween. A copy of the data is stored at the personal computer. The data stored thereat is typically also updateable, i.e., changeable at the personal computer.

When the data is stored at more than one location, e.g., at the portable processing device and at the personal computer, subsequent change to any portion of the data stored at either of the locations results in the data no longer being true copies of one another. That is to say, the data stored at the separate locations no longer form complete copies of one another. Addition, deletion, or change of any data portion causes the data stored at one location no longer to be in complete conformity with the data stored at the other of the locations.

To place the data back in match with one another, synchronization of the databases containing the data with one another is required. Synchronization operations are performed, for instance, during subsequent back-up operations during which the data stored at the respective locations are compared together. And, responsive to the comparisons, portions of the data found to be out-of-match with one another are identified. Alteration of the data is then performed to place the data in conformity with one another.

Other portable devices provide for back-up of the stored data to a computing station by way of a radio air interface. Data back-up operations and data synchronization operations performed by way of a radio air interface are, however, more problematical than operations performable by way of a conventional wireline connection. Bandwidth limitations limit the communication capacity that can be allocated for back-up and synchronization operations. Conventional manners utilized by wireline connections by which to back-up and synchronize data stored at the respective locations are, as a general rule, prohibitively bandwidth consumptive when applied to a system in which such operations are performed by way of a radio air interface.

Synchronization anchoring, i.e., manners by which the separate locations identify a synchronization session pursuant to which data synchronization operations are performed must be minimal, but adequately identify the synchronization session at the separate locations.

EP 0917077 A2 discloses a system for synchronizing data between a personal computer and a personal digital assistant by using a wireless communication path

Any manner by which better to provide for the back-up and synchronization of the data of dynamically-alterable databases by way of a radio air interface would therefore be advantageous.

It is light of this background information related to the synchronization of data contents of databases by way of a radio air interface that the significant improvements of the present invention have evolved.

### SUMMARY OF THE INVENTION

The present invention, accordingly, advantageously provides apparatus as defined in independent claim 1, and an associated method as defined in independent claim 11, by which to synchronize a database embodied at a mobile node with a corresponding database copy embodied at a network part of a communication network.

Through operation of an embodiment of the present invention, a manner is provided by which to facilitate initiation of a synchronization session by which to place, if needed, the database contents of the respective databases in match with one another.

In one aspect of the present invention, session state information is generated at a device that initiates the synchronization session and communicates the session state information to a recipient device. The session state information identifies the synchronization state of the initiating device and identifies the synchronization session and the portions of the data that are to be synchronized during the synchronization session.

In another aspect of the present invention, a synchronization session is initiated by a synchronization session initiator. A synchronization session initiator is formed of either the mobile node or a network device, i.e., a synchronization server. Both the mobile node and the synchronization server include session state information generators. The device at which the synchronization session is initiated forms a datagram that includes the session state information associated with the synchronization session. And, once the datagram is formed, the datagram is sent to the other of the devices that is to be a party to the synchronization session. The device to which the datagram is sent forms a synchronization session recipient. The session state information identifies the synchronization state of the synchronization state initiator.

The session state information includes a session identification value of the synchronization session initiator. The session identification value identifies a sequential number of prior synchronization sessions initiated by the synchronization session initiator. And, the session state information also includes an expected-session identification value. The expected-session identification value identifies a next-expected number of sessions that would be expected by the synchronization session initiator from the synchronization session recipient if the synchronization session recipient were instead the synchronization session initiator. That is to say, the expected-session identification value is the session ID that is expected by the session initiator at the point at which the synchronization session initiator initiates the synchronization session. The values of the session identification value and the expected-session identification value are used as synchronization anchors.

In another aspect of the present invention, a formatter is used to form the datagram that is sent by the synchronization session initiator to the synchronization session recipient. Again, as either the network part or the mobile node forms the synchronization session initiator, datagram generators are embodied at both the mobile node and at the network part. The datagram generator formats data into the datagram format. The datagram format includes a header portion that includes session state information fields. The session state information fields are selectably populated with values of the session identification value and the expected-session identification value. Other information is selectably also populated in other portions and fields of the datagram by the formatter.

For instance, another portion of the datagram is populated with values of data contents, such as data fields that are to be synchronized pursuant to the synchronization session. The datagram is formed, and then sent to the synchronization session recipient. When delivered to the synchronization session recipient, the data contained in the datagram is extracted the extracted data includes the values contained in the session state information fields in the header portion of the datagram. Thereby, the synchronization session recipient is provided with information associated with the synchronization state, as well as the values of the session id value and expected-session id value utilized to notify the synchronization session recipient of the synchronization session pursuant to which the data of the datagram is synchronized.

In these and other aspects, therefore, apparatus, and an associated method, is provided for a radio communication system. The radio communication system has a network part at which a network-copy database is maintained and a mobile node at which a mobile-node copy database is maintained. A synchronization session is initiated by which to synchronize values of fields formed at the network-copy database and at the mobile-copy database. A session state information generator is embodied at least at a selected one of the network part and the mobile node. The session state generator forms at least a first session state information value. The first session state information value identifies a synchronization state of the at least the selected one of the network part and the mobile node at which the session state generator is embodied. Indications of the at least the first session state information value are communicated between the network part and the mobile node to initiate the synchronization session.

A more complete appreciation of the present invention and the scope thereof can be obtained from the accompanying drawings that are briefly summarized below, the following detailed description of the presently-preferred embodiments of the invention, and the appended claims.

### BRIEF DESCRIPTION OF THE DRAWINGS

Figure 1 illustrates a functional block diagram of a radio communication system in which an embodiment of the present invention is operable.
Figure 2 illustrates a functional block diagram of devices forming parts of the communication system shown in Figure 1 and forming synchronization parties pursuant to a synchronization session.
Figure 3 illustrates a message sequence diagram representative signaling generated pursuant to a synchronization session during operation of the communication system shown in Figures 1-2.
Figure 4 illustrates another message sequence diagram, also representative of signaling generated during operation of the communication system shown in Figures 1 and 2.
Figure 5 illustrates a method flow diagram listing the method steps of the method of operation of an embodiment of the present invention.

### DETAILED DESCRIPTION

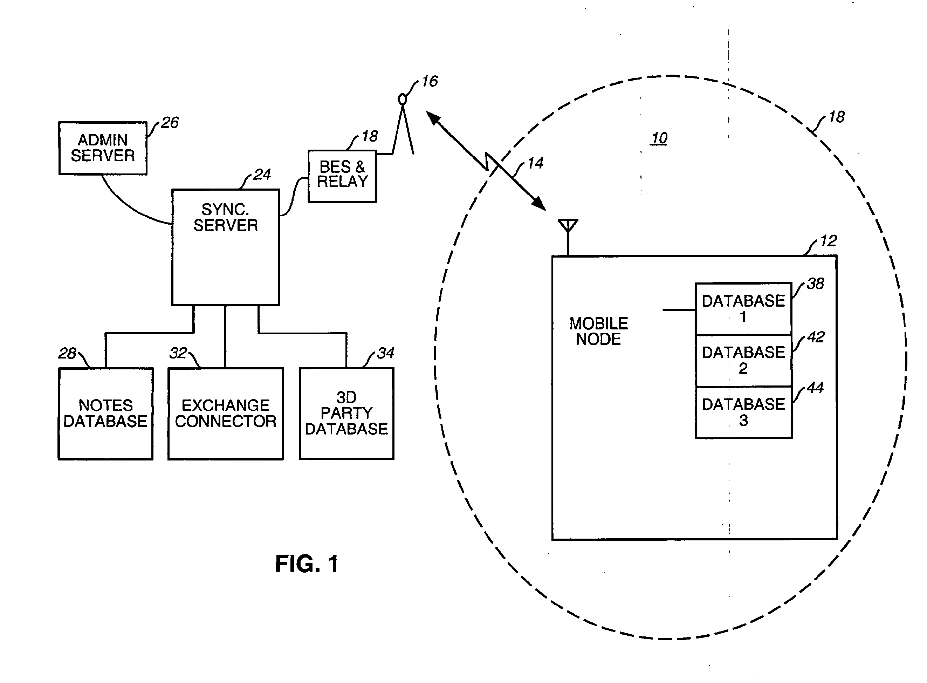

Referring first to Figure 1, a radio communication system, shown generally at 10, provides for communications between communication stations operable in the communication system. A radio air interface is formed between a network part of the communication system and mobile nodes, of which the mobile node 12 is representative. Radio channels are defined, and communications are effectuated between the network part and the mobile nodes by way of the radio channels.

During operation of the radio communication system, data is communication pursuant to effectuation of communication services. Data originated at a mobile node is selectably communicated by way of an up-link channel defined upon a radio uplink of the radio air interface extending between the mobile node and a network part of the radio communication system. Analogously, data originated at the network part of the radio communication system is communicated to a mobile node by way of down-link channels defined upon a radio downlink of the radio air interface extending between the network part and the mobile nodes.

The network part of the communication system is functionally represented. Here, a single base station 16 is illustrated. A base station 16 forms part of the network part. And, the base station defines a coverage area, referred to as a cell 18. When the mobile node is positioned within the coverage area defined by a base station, the mobile node is generally capable of communicating with the base station with which the cell is associated. Due to the mobility permitted of the mobile node, the mobile node is positionable, at other times, in coverage areas formed by cells defined by other base stations.

The network part of the communication system also includes a server and relay device 18. Here, the device is a BlackBerry™ Enterprise Server and a relay. And, the device extends to the base station. The device is further coupled to a synchronization server 24. While the relay/BES and the server are shown to be separate functional entities, the functions performed by such entities, in one implementation, are embodied together at a common device or platform. The network part of the communication system also includes an administration (Admin) server 26. The administration server is coupled to the synchronization server. The administration server provides, e.g., administrative services to the communication system. Administrative services provide, for instance, administrative control over the synchronization server.

The synchronization server is functionally coupled to network-based databases, synchronization of which is performed during synchronization operations. Here, three exemplary database-types are shown in the Figure. A Lotus™ Notes database 28, an Exchange™ Connector for an Exchange-based database 32, and a third-party database 34 are shown in the Figure. Other database-types can analogously be represented.

In the exemplary implementation, the databases are of a text format, here an extensible mark-up language (XML) format. The data maintained at the databases 28, 32, and 34 are formed of a plurality of data portions, formatted into data records having data fields. The fields into which a database, such as the database 28, is formed include, for instance, record fields that are selectably populated with data. Selected ones of the record fields form key fields.

Corresponding databases are coupled to, or are embodied in, the mobile node. Databases 38, 42, and 44 are represented at the mobile node. The database 38 corresponds to the Lotus™ Notes database 28; the database 42 corresponds to the Exchange-based database 32; and the database 44 corresponds to the third-party database 34. That is to say, the databases 28 and 38, 32 and 42, and 34 and 44 are copies of each other, albeit separately and asynchronously updateable.

Synchronization procedures are performed pursuant to operation of an embodiment of the present invention by which to place database contents of the respective databases in-match with one another. In the event that, for instance, a database record of a database is updated at the mobile node, synchronization procedures cause the corresponding value of the corresponding database maintained at the network to be brought into match therewith.

Thereby, upon completion of synchronization operations, the databases are in-match with one another, and the data populating the fields of the respective database copies are identical with one another.

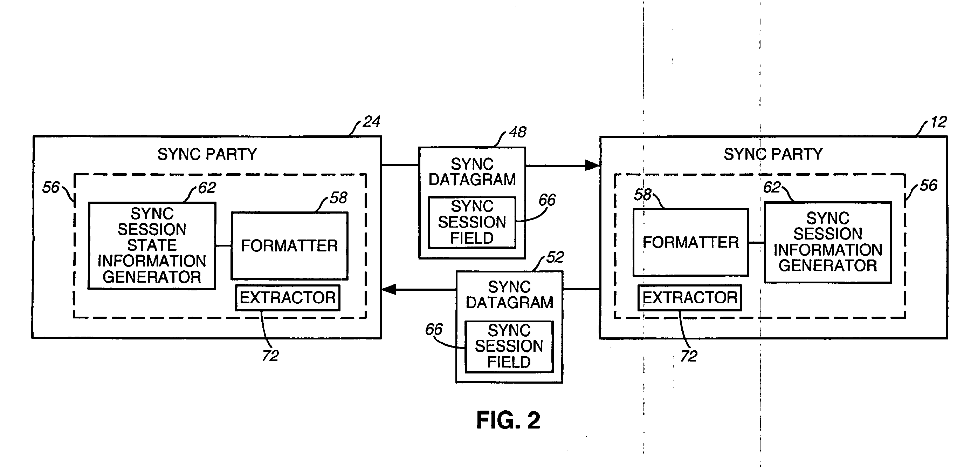

Figure 2 again illustrates portions of the communication system 10. The elements form parties to a synchronization session in which databases maintained at the mobile node and network part, respectively, are placed in synchronization with one another. Here, the mobile node 12 and synchronization server 24 are identified as synchronization (sync) parties. Entities of the respective elements are operable during a synchronization session to place database contents of the databases maintained by, or embodied at, the respective elements in synchronization with one another. During a synchronization session, synchronization (sync) datagrams are created and communicated between the respective synchronization parties. Either of the entities initiates a synchronization session. The synchronization party that starts the synchronization session is referred to as a synchronization session initiator. And, the other party to the synchronization session is referred to as the synchronization session recipient.

Synchronization datagrams are communicated between the respective synchronization parties during a synchronization session. Here, synchronization datagrams 48 and 52 are representative of synchronization datagrams communicated between the respective parties to the synchronization session. The device that forms the synchronization session initiator sends the first synchronization datagram to the synchronization session datagram recipient.

Each of the synchronization parties includes apparatus 56 of an embodiment of the present invention. The apparatus includes functional elements that are implemented in any desired manner, such as by algorithms executable by processing circuitry. The apparatus 56 includes a formatter 58 that formats data into the datagram. The apparatus also includes a synchronization session state information state generator 62. The synchronization session state information state generator generates the synchronization session identification values and expected-session identification values. The values formed by the session state information generator 62 are provided to the formatter. The formatter formats the values provided thereto by the session state information generator into a session state information field of a header part of a datagram formed by the formatter. The session state information field is indicated as the section 66 of the datagram 48. The apparatus 56 embodied at the other of the synchronization parties includes corresponding structure by which to populate a corresponding field of the datagram, subsequently generated during the synchronization session.

The synchronization session state identifier is a unique number that identifies a synchronization session formed between two synchronization parties. And, the expected session identifier is a session identifier that is expected by the synchronization session initiator at the point in time in which the synchronization session is initiated thereat. The synchronization session identifier and the expected-session identifier are used as synchronization session anchors.

A synchronization session starts when a synchronization party that forms the session initiator sends a first synchronization datagram of a particular session. A synchronization session does not require, however, a connection-establishing process between the synchronization parties. That is to say, sending of special synchronization datagrams to commence a synchronization session is not required.

The apparatus 56 further includes an extractor 72 that operates, upon delivery of the synchronization datagram thereto, to extract the values in the session initiation field. The extractor 72 is here shown at the apparatus 56 embodied at the synchronization party forming the session recipient.

Either party, i.e., either the mobile node or the synchronization server can initiate a synchronization session. And, both of the synchronization parties can be session initiators at the same time, pursuant to separate synchronization sessions. The direction of the datagram becomes important to identify with which of the separate synchronization sessions that the datagram is associated. The session identifier value and the expected-session identifier values are accorded integer values of positive or negative signs. A nomenclature is utilized to identify the separate synchronization parties. For instance, the synchronization server is identified by positive-signed integer values, and the mobile node is negative-signed integer values. Thereby any session initiated by the synchronization server includes a positive session identifier value. And, server synchronization party holds a negative-valued session identifier value.

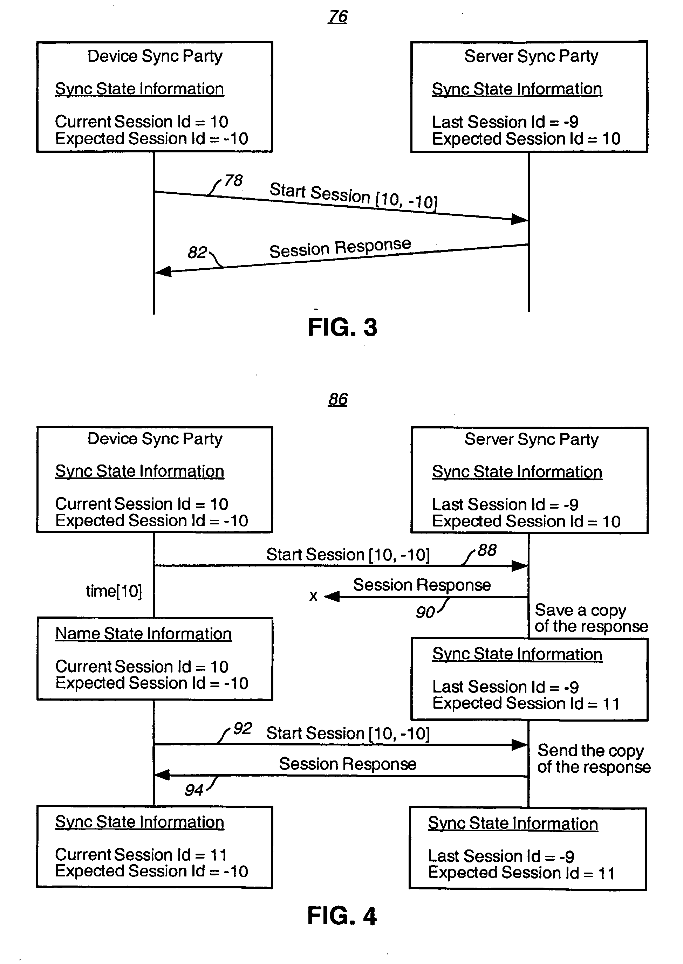

The message sequence diagram, shown generally at 76, in Figure 3 indicates that the synchronization server 24 forms a synchronization session initiator. The synchronization state information formed at the synchronization server includes a value of 10 as the current session identifier value. And, the value of -10 forms the expected session identifier value. A datagram is formed and sent, as indicated by the segment 78 to the synchronization session recipient, here the mobile node 12 (shown in Figure 1). The synchronization state information at the device includes a last session identifier value of - 9 and an expected session identifier value of positive 10. A session response returned by the mobile node to the synchronization server is indicated by the segment 82. The datagram formed by the synchronization session recipient includes the session state information values as portions of the formatted datagram.

Figure 4 illustrates a message sequence diagram, shown generally at 86. Again, the synchronization server 24 forms the session initiator, and the mobile node forms the session recipient. And, the synchronization state information is of values, at the respective parties, as shown in the Figure. A datagram formed at the session initiator is sent, indicated by the segment 88, to the recipient device formed of the mobile node. A session response is prepared by the mobile node and sent therefrom, indicated by the segment 90. Here, however, the response is not delivered to the synchronization initiator.

A timer at the session initiator times out without detection at the synchronization server of the response to the start session datagram, previously sent by the synchronization server. Because there has been no reply, the synchronization state information does not change value, and a datagram is again formed and sent, indicated by the segment 92, to the mobile node, forming the data recipient. Because the mobile node previously responded to the previously-sent datagram, the expected-session identifier value maintained thereat changes. But, the because of the retransmission of the datagram, indicated by the same session state information, the mobile node returns, indicated by the segment 94, a copy of the previously-sent response. Here, the datagram is returned to the synchronization session initiator, and additional synchronization operations, if needed, continue.

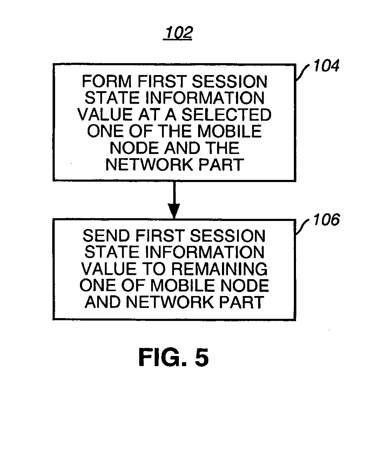

Figure 5 illustrates a method flow diagram, shown generally at 102, representative of the method of operation of an embodiment of the present invention. The method facilitates initiation of a synchronization session by which to synchronize values of fields formed at database copies maintained at a network part and at a mobile node of a radio communication system.

First, and as indicated by the block 104, at least a first session station information value is formed at least at a selected one of the network part and the mobile node. The first session state information value identifies a synchronization state of the at least the selected one of the network part and the mobile node at which the first session state information value is formed.

Then, and as indicated by the block 106, the at least the first session state information value is sent to the remaining one of the network part and the mobile node. Thereby, the remaining one of the network part and the mobile node is informed of the synchronization state of the selected one of the network part and the mobile.

Thereby, the sessions state information values are known both to the mobile node and the network part, and synchronization operations can commence.

The previous descriptions are of preferred examples for implementing the invention, and the scope of the invention should not necessarily be limited by this description. The scope of the present invention is defined by the following claims:

## Claims

1. Apparatus for a radio communication system (10) having a network part at which a network-copy database (28,32,34) is maintained and a mobile node at which a mobile-copy database (38, 42, 44) is maintained, said apparatus for initiating a synchronization session by which to synchronize values of fields formed at the network-copy and the mobile-copy, respectively, of the database, said apparatus **characterised by:**
a session state information generator (62) embodied at least at a selected one of the network part and the mobile node that informs an initiator at which the synchronization session is initiated, said session state generator for forming at least a first session state information values identifying a synchronization state of the at least the selected one of the network part and the mobile node at which the session state generator is embodiment, the first session state information value communicated between the network part and the mobile node to initiate the synchronization session including a session identification value that identifies a sequential number of prior synchronization sessions initiated by the selected one of the network part and the mobile node at which said session state information generator is embodied and an expected-session identification value that identifies a next-expected number of sessions initiated by an other of the selected one of the network part and the mobile node at which said session state information generator is embodied.

2. The apparatus of claim 1 further comprising a datagram formatter coupled to said session state initiation generator, said datagram formatter for formatting a datagram for communication between the network part and the mobile node pursuant to the synchronization session, the datagram formatted by said datagram formatter including a session-state field, the session state field populated with the values of the session state information values generated by said session state initiation generator.

3. The apparatus of claim 2 wherein the datagram formatted by said datagram formatter comprises a header field and wherein said session-state field forms part of the header field.

4. The apparatus of claim 1 wherein the session identification value is of a first range of values when said session state information generator is embodied at the network part and wherein the session identification value is of a second range of values when said session state information generator is embodied at the mobile node.

5. The apparatus of claim 4 wherein the first range of values comprise positive-valued values and wherein the second range of values comprise negative-valued values.

6. The apparatus of claim 2 wherein the session identification value identifies a synchronization session between the network part and the mobile node, initiated by the network part.

7. The apparatus of claim 6 wherein the network part comprises a synchronization server and wherein said session state information generator is embodied at the synchronization server.

8. The apparatus of claim 2 further comprising a session state information detector embodied at least at a remaining one of the network part and the mobile node, said session state information detector for detecting the session state information values generated by said session state information generator embodied at the selected one of the network part and the mobile node subsequent to communication of the datagram containing the first session state information values to the remaining one of the network part and the mobile node.

9. The apparatus of claim 8 wherein said session state information detector comprises a session-state field value extractor, said session state field value extractor for extracting the values of the at least the first session-state information value populating the session state field of the datagram.

10. The apparatus of claim 2 wherein the datagram formatted by said datagram pursuant to the synchronization session formatter comprises a first datagram and at least a second datagram and wherein said datagram formatter formed of said session state initiation generator formats the first session state information values into each of the first and at least second datagrams.

11. A method of communicating in a radio communication system having a network part at which a network-copy database (28,32,34) is maintained and a mobile node at which a mobile-copy database (38,42,44) is maintained, said method for initiating a synchronization session by which to synchronize values of fields formed at the network-copy and the mobile-copy, respectively, of the database, said method **characterised by:**
forming session state information values at least at a selected one of the network part and the mobile node, the session state information values identifying a synchronization state of the at least the selected one of the network part and the network part at which the first session state information value is formed, the session state information values including a session identification value that identifies a sequential number of prior synchronization sessions initiated by the selected one of the network part and the mobile node at which the session identifier value is formed and an expected-session identification values that identifies a next-expected number of session initiated by an other of the selected one of the network part and the mobile node; and
sending the session state information values to a remaining one of the network part and the mobile node to inform the remaining one of the network part and the mobile node of the synchronization state of the selected one of the network part and the mobile node.

12. The method of claim 11 further comprising the operation, prior to said operation of sending, of formatting a datagram, the datagram including a session-state field, the session-state field populated with values of the session state values formed during said operation of forming.

13. The method of claim 12 wherein the datagram formatted during said operation of formatting includes a header field and wherein the session-state field forms part of the header field.

14. The method of claim 11 wherein the session identification value is of a first range of values when the session identification value is formed at the network part and wherein the session identification value is of a second range of values when the session identification value is formed at the mobile node.

15. The method of claim 14 wherein the first range of values comprise positive-valued values and wherein the second range of values comprise negative-valued values.

16. The method of claim 15 wherein the session identification value identifies a synchronization session between the network part and the mobile node, initiated by the network part.

## Patentansprüche

1. Vorrichtung für ein Funkkommunikationssystem (10), welches einen Netzwerkteil, an welchem eine Netzwerkkopie-Datenbank (28, 32, 34) geführt wird, und einen mobilen Knoten, an welchem eine Mobilkopie-Datenbank (38, 42, 44) geführt wird, aufweist, wobei die Vorrichtung dazu dient, eine Synchronisierungssitzung zu initiieren, um Werte von Feldern zu synchronisieren, die an der Netzwerkkopie, bzw. an der Mobilkopie der Datenbanken ausgebildet sind, wobei die Vorrichtung **gekennzeichnet ist durch**
einen Sitzungsstatus-Informationserzeuger (62), der zumindest an einem ausgewählten von Netzwerkteil und mobilem Knoten enthalten ist, welcher Erzeuger eine Initiiereinrichtung informiert, an der die Synchronisierungssitzung initiiert wird, wobei der Sitzungsstatus-Erzeuger dazu dient, zumindest einen Informationswerte von einem ersten Sitzungsstatus zu bilden, die einen Synchronisationsstatus von zumindest dem einen ausgewählten von Netzwerkteil und mobilem Knoten identifiziert, an dem der Sitzungsstatus-Erzeuger enthalten ist, wobei der erste Sitzungsstatus-Informationswert, der zwischen dem Netzwerkteil und dem mobilen Knoten kommuniziert wird, um die Synchronisierungssitzung zu initiieren, einen Sitzungsidentifizierungswert enthält, der eine sequentielle Nummer vorheriger Synchronisierungssitzungen identifiziert, die von dem einen ausgewählten von Netzwerkteil und mobilem Knoten, an dem der Sitzungsstatus-Informationserzeuger enthalten ist, initiiert wurden und einen Identifizierungswert einer erwarteten Sitzung, der eine nächste erwartete Nummer von Sitzungen identifiziert, die von einem anderen als dem einen ausgewählten von Netzwerkteil und mobilem Knoten, an dem der Sitzungsstatus-Erzeuger enthalten ist, initiiert wurden.

2. Vorrichtung nach Anspruch 1, welche weiters einen Datagramm-Formatierer aufweist, der an den Sitzungsstatus-Informationserzeuger angeschlossen ist, wobei der Datagramm-Formatierer dazu dient, ein Datagramm für die Kommunikation zwischen dem Netzwerkteil und dem mobilen Knoten gemäß der Synchronisierungssitzung zu formatieren, wobei das Datagramm, das von dem Datagramm-Formatierer formatiert wurde, ein Sitzungsstatus-Feld enthält, wobei in das Sitzungsstatus-Feld die Werte der Sitzungsstatus-Informationswerte eingepflegt sind, die von dem Sitzungsstatus-Initiierungserzeuger erzeugt wurden.

3. Vorrichtung nach Anspruch 2, wobei das von dem Datagramm-Formatierer formatierte Datagramm ein Kopffeld enthält und wobei das Sitzungsstatus-Feld einen Teil des Kopffeldes bildet.

4. Vorrichtung nach Anspruch 1, wobei der Sitzungsidentifizierungswert aus einem ersten Wertebereich stammt, wenn der Sitzungsstatus-Informationserzeuger an dem Netzwerkteil enthalten ist, und wobei der Sitzungsidentifizierungswert aus einem zweiten Wertebereicht stammt, wenn der Sitzungsstatus-Informationserzeuger an dem mobilen Knoten enthalten ist.

5. Vorrichtung nach Anspruch 4, wobei der erste Wertebereich positiv bewertete Werte aufweist, und wobei der zweite Wertebereich negativ bewertete Werte aufweist.

6. Vorrichtung nach Anspruch 2, wobei der Sitzungsidentifizierungswert eine Synchronisierungssitzung zwischen dem Netzwerkteil und dem mobilen Knoten identifiziert, die von dem Netzwerkteil initiiert wird.

7. Vorrichtung nach Anspruch 6, wobei der Netzwerkteil einen Synchronisations-Server aufweist, und wobei der Sitzungsstatus-Informationserzeuger an dem Synchronisations-Server enthalten ist.

8. Vorrichtung nach Anspruch 2, welche weiters einen Sitzungsstatus-Informationsdetektor aufweist, der zumindest auf einem verbliebenen von Netzwerkteil und mobilem Knoten enthalten ist, wobei der Sitzungsstatus-Informationsdetektor dazu dient, die Sitzungsstatus-Informationswerte zu detektieren, die von dem Sitzungsstatus-Informationserzeuger, der an dem ausgewählten von Netzwerkteil und mobilem Knoten enthalten ist, nachfolgend auf die Kommunikation des Datagramms, das die Informationswerte von der ersten Sitzungsstatus enthält, an den einen verbliebenen von Netzwerkteil und mobilem Knoten, erzeugt werden.

9. Vorrichtung nach Anspruch 8, wobei der Sitzungsstatus-Informationsdetektor einen Sitzungsstatus-Feldwertextraktor aufweist, wobei der Sitzungsstatus-Feldwertextraktor dazu dient, die Werte von zumindest dem Informationswert von der ersten Sitzungsstatus, der in das Sitzungsstatus-Feld des Datagramms eingepflegt ist, zu extrahieren.

10. Vorrichtung nach Anspruch 2, wobei das Datagramm, das von dem Datagramm-Formatierer gemäß der Synchronisierungssitzung formatiert wurde, ein erstes Datagramm und zumindest ein zweites Datagramm aufweist, und wobei der Datagramm-Formatierer, der von dem Sitzungsstatus-Initiierungserzeuger gebildet ist, die Informationswerte von dem ersten Sitzungsstatus in jedes von dem ersten und zumindest zweiten Datagramm formatiert.

11. Verfahren zum Kommunizieren in einem Funkkommunikationssystem, welches einen Netzwerkteil, an welchem eine Netzwerkkopie-Datenbank (28, 32, 34) geführt wird, und einen mobilen Knoten, an welchem eine Mobilkopie-Datenbank (38, 42, 44) geführt wird, aufweist, wobei das Verfahren dazu dient, eine Synchronisierungssitzung zu initiieren, um Werte von Feldern zu synchronisieren, die an der Netzwerkkopie, bzw. an der Mobilkopie der Datenbanken ausgebildet sind, wobei das Verfahren **gekennzeichnet ist durch**
Bilden von Sitzungsstatus-Informationswerten an zumindest einem ausgewählten von Netzwerkteil und mobilem Knoten, wobei die Sitzungsstatus-Informationswerte einen Synchronisationsstatus von zumindest dem einen ausgewählten von Netzwerkteil und mobilem Knoten identifizieren, an dem der Informationswert von der ersten Sitzungsstatus gebildet ist, wobei die Sitzungsstatus-Informationswerte einen Sitzungsidentifizierungswert enthalten, der eine sequentielle Nummer vorheriger Synchronisierungssitzungen identifiziert, die von dem einen ausgewählten von Netzwerkteil und mobilem Knoten, an dem der Sitzungsstatus-Informationswert gebildet ist, initiiert wurden, und Identifizierungswerte einer erwarteten Sitzung, die eine nächste erwartete Nummer von Sitzungen identifizieren, die von einem anderen als dem einen ausgewählten von Netzwerkteil und mobilem Knoten initiiert wurden; und
Senden der Sitzungsstatus-Informationswerte an einen verbliebenen von Netzwerkteil und mobilem Knoten, um den verbliebenen von Netzwerkteil und mobilem Knoten über den Synchronisationsstatus des einen ausgewählten von Netzwerkteil und mobilem Knoten zu informieren.

12. Verfahren nach Anspruch 11, welches weiters, vor dem Vorgang des Sendens, den Vorgang aufweist, ein Datagramm zu formatieren, wobei das Datagramm ein Sitzungsstatus-Feld enthält, wobei in das Sitzungsstatus-Feld Werte der Sitzungsstatus-Informationswerte eingepflegt sind, die während des Vorgangs des Bildens gebildet wurden.

13. Verfahren nach Anspruch 12, wobei das Datagramm, das während besagtem Vorgang des Formatierens formatiert wurde, ein Kopffeld enthält, und wobei das Sitzungsstatus-Feld einen Teil des Kopffeldes bildet.

14. Verfahren nach Anspruch 11, wobei der Sitzungsidentifizierungswert aus einem ersten Wertebereich stammt, wenn der Sitzungsidentifizierungswert an dem Netzwerkteil gebildet ist, und wobei der Sitzungsidentifizierungswert aus einem zweiten Wertebereich stammt, wenn der Sitzungsidentifizierungswert an dem mobilen Knoten gebildet ist.

15. Verfahren nach Anspruch 14, wobei der erste Wertebereich positiv bewertete Werte aufweist, und wobei der zweite Wertebereich negativ bewertete Werte aufweist.

16. Verfahren nach Anspruch 15, wobei der Sitzungsidentifizierungswert eine Synchronisierungssitzung zwischen dem Netzwerkteil und dem mobilen Knoten identifiziert, die von dem Netzwerkteil initiiert ist.

## Revendications

1. Appareil destiné à être utilisé dans un système de radiocommunication (10) comportant une partie réseau au niveau de laquelle une base de données de copie réseau (28, 32, 34) est tenue à jour et un noeud mobile au niveau duquel une base de données de copie mobile (38, 42, 44) est tenue à jour, ledit appareil servant à initier une session de synchronisation permettant de synchroniser des valeurs de champs formées au niveau de la copie réseau et de la copie mobile, respectivement, de la base de données, ledit appareil étant **caractérisé par** :
un générateur d'informations sur l'état de la session (62) réalisé au moins au niveau d'un moyen sélectionné parmi la partie réseau et le noeud mobile qui informe un initiateur au niveau duquel la session de synchronisation est initiée, ledit générateur d'informations sur l'état de la session servant à former au moins une première valeur d'informations sur l'état de la session identifiant un état de synchronisation du au moins un moyen sélectionné parmi la partie réseau et le noeud mobile au niveau duquel le générateur d'informations sur l'état de la session est réalisé, la première valeur d'informations sur l'état de la session communiquée entre la partie réseau et le noeud mobile pour initier la session de synchronisation incluant une valeur d'identification de session qui identifie un numéro d'ordre de sessions de synchronisation antérieures initiées par le moyen sélectionné parmi la partie réseau et le noeud mobile au niveau duquel ledit générateur d'informations sur l'état de la session est réalisé et une valeur d'identification de session attendue qui identifie un numéro attendu ensuite de session initiée par un autre moyen que le moyen sélectionné parmi la partie réseau et le noeud mobile au niveau duquel ledit générateur d'informations sur l'état de la session est réalisé.

2. Appareil suivant la revendication 1 comprenant en outre un moyen de mise au format de datagramme connecté audit générateur d'initiation d'état de la session, ledit moyen de mise au format de datagramme servant à mettre au format un datagramme destiné à être communiqué entre la partie réseau et le noeud mobile conformément à la session de synchronisation, le datagramme mis au format par ledit moyen de mise au format de datagramme incluant un champ d'état de la session, le champ d'état de la session étant peuplé des valeurs des valeurs d'informations sur l'état de la session générées par ledit générateur d'initiation d'état de la session.

3. Appareil suivant la revendication 2 dans lequel le datagramme mis au format par ledit moyen de mise au format de datagramme comprend un champ d'en-tête et dans lequel ledit champ d'état de la session fait partie du champ d'en-tête.

4. Appareil suivant la revendication 1 dans lequel la valeur d'identification de session est comprise dans un premier intervalle de valeurs lorsque ledit générateur d'informations sur l'état de la session est réalisé au niveau de la partie réseau et dans lequel la valeur d'identification de session est comprise dans un deuxième intervalle de valeurs lorsque ledit générateur d'informations sur l'état de la session est réalisé au niveau du noeud mobile.

5. Appareil suivant la revendication 4 dans lequel le premier intervalle de valeurs comprend des valeurs positives et dans lequel le deuxième intervalle de valeurs comprend des valeurs négatives.

6. Appareil suivant la revendication 2 dans lequel la valeur d'identification de session identifie une session de synchronisation entre la partie réseau et le noeud mobile, initiée par la partie réseau.

7. Appareil suivant la revendication 6 dans lequel la partie réseau comprend un serveur de synchronisation et dans lequel ledit générateur d'informations sur l'état de la session est réalisé au niveau du serveur de synchronisation.

8. Appareil suivant la revendication 2 comprenant en outre un détecteur d'informations sur l'état de la session réalisé au moins au niveau d'un moyen restant parmi la partie réseau et le noeud mobile, ledit détecteur d'informations sur l'état de la session servant à détecter les valeurs d'informations sur l'état de la session générées par ledit générateur d'informations sur l'état de la session réalisé au niveau du moyen sélectionné parmi la partie réseau et le noeud mobile suite à la communication du datagramme contenant les premières valeurs d'informations sur l'état de la session au moyen restant parmi la partie réseau et le noeud mobile.

9. Appareil suivant la revendication 8 dans lequel ledit détecteur d'informations sur l'état de la session comprend un extracteur de valeur de champ d'état de la session, ledit extracteur de valeur de champ d'état de la session servant à extraire les valeurs de la au moins une première valeur d'informations sur l'état de la session peuplant le champ d'état de la session du datagramme.

10. Appareil suivant la revendication 2 dans lequel le datagramme mis au format par ledit datagramme conformément au moyen de mise au format de session de synchronisation comprend un premier datagramme et au moins un deuxième datagramme et dans lequel ledit moyen de mise au format de datagramme formé dudit générateur d'initiation d'état de la session met au format les premières valeurs d'informations sur l'état de la session en chacun des premier et au moins deuxième datagrammes .

11. Procédé de communication dans un système de radiocommunication comportant une partie réseau au niveau de laquelle une base de données de copie réseau (28, 32, 34) est tenue à jour et un noeud mobile au niveau duquel une base de données de copie mobile (38, 42, 44) est tenue à jour, ledit procédé servant à initier une session de synchronisation permettant de synchroniser des valeurs de champs formées au niveau de la copie réseau et de la copie mobile, respectivement, de la base de données, ledit procédé étant **caractérisé par** :
la formation de valeurs d'informations sur l'état de la session au moins au niveau d'un moyen sélectionné parmi la partie réseau et le noeud mobile, les valeurs d'informations sur l'état de la session identifiant un état de synchronisation du au moins un moyen sélectionné parmi la partie réseau et le noeud mobile au niveau duquel la première valeur d'informations sur l'état de la session est formée, les valeurs d'informations sur l'état de la session incluant une valeur d'identification de session qui identifie un numéro d'ordre de sessions de synchronisation antérieures initiées par le moyen sélectionné parmi la partie réseau et le noeud mobile au niveau duquel la valeur d'identification de session est formée et une valeur d'identification de session attendue qui identifie un numéro attendu ensuite de session initiée par un autre moyen que le moyen sélectionné parmi la partie réseau et le noeud mobile, et
l'envoi des valeurs d'informations sur l'état de la session à un moyen restant parmi la partie réseau et le noeud mobile pour informer le moyen restant parmi la partie réseau et le noeud mobile de l'état de synchronisation du moyen sélectionné parmi la partie réseau et le noeud mobile.

12. Procédé suivant la revendication 11 comprenant en outre l'opération, avant ladite opération d'envoi, de mise au format d'un datagramme, le datagramme incluant un champ d'état de la session, le champ d'état de la session étant peuplé de valeurs des valeurs d'état de la session formées pendant ladite opération de formation.

13. Procédé suivant la revendication 12 dans lequel le datagramme mis au format pendant ladite opération de mise au format comprend un champ d'en-tête et dans lequel le champ d'état de la session fait partie du champ d'en-tête.

14. Procédé suivant la revendication 11 dans lequel la valeur d'identification de session est comprise dans un premier intervalle de valeurs lorsque la valeur d'identification de session est formée au niveau de la partie réseau et dans lequel la valeur d'identification de session est comprise dans un deuxième intervalle de valeurs lorsque la valeur d'identification de session est formée au niveau du noeud mobile.

15. Procédé suivant la revendication 14 dans lequel le premier intervalle de valeurs comprend des valeurs positives et dans lequel le deuxième intervalle de valeurs comprend des valeurs négatives.

16. Procédé suivant la revendication 15 dans lequel la valeur d'identification de session identifie une session de synchronisation entre la partie réseau et le noeud mobile, initiée par la partie réseau.
